# EUROPEAN PATENT SPECIFICATION

(11) **EP 0 749 102 B1**
(45) Date of publication and mention of the grant of the patent: **16.08.2000**
(21) Application number: 96304381.5
(22) Date of filing: 12.06.1996
(51) Int. Cl.: G08B 5/22

(54) **Message protection radio display paging using confidential code and password**
Geschützte Funkruf-Nachrichtenanzeige mit Vertraulichkeitscode und Passwort
Système d'affichage protégé dans un système de téléappel utilisant un code de condifidentialité et un mot de passe

(30) Priority: 13.06.1995 JP 14618195
(43) Date of publication of application: 18.12.1996
(73) Proprietor: NEC CORPORATION, Tokyo (JP)
(72) Inventor: Katayama, Hideyuki, Kakegawa-shi, Shizuoka (JP)
(74) Representative: Orchard, Oliver John

(56) References cited:
- WO-A-92/17006
- US-A- 5 146 217
- US-A- 5 283 832
- PATENT ABSTRACTS OF JAPAN vol. 012, no. 435 (E-683), 16 November 1988 & JP-A-63 169833 (NIPPON DENSO CO LTD), 13 July 1988,

## Description

The present invention relates generally to selective calling radio display pagers, and more specifically to a radio display pager for protecting confidential messages from unauthorized access.

Japanese Laid-Open Patent Specification Sho-63-169833 discloses a radio display pager which shares a common address with other pagers for receiving non-confidential messages transmitted in a broadcast mode. To permit individual access, the prior art pager has a plurality of coding/decoding systems which are respectively identified by unique codes. One of the unique codes is used among the users of a particular group wishing to communicate group-specific messages. When sending such a message, the unique code is sent as part of the message field of a paging signal and the message is encoded according to a coding table specified by the unique code. The same unique code is set in the pagers of the same group. If a paging signal carrying the same unique code is received, the message contained in that signal is decoded according to a decoding table specified by the unique code and the decoded message is displayed.

However, if the pager of a given group is intentionally used by the members of other groups, information of confidential nature might be leaked to unauthorized members and an undesirable situation could occur.

In the specification of United States patent number 5,146,217, there is described a selective call receiver having a selective call address and access authorization means; it being necessary for access authorization to be given, if required, before any stored received information can be retrieved.

In the specification of United States patent number 5,283,832, there is described a paging receiver for receiving a secure R.F. communication, in which a de-encrypter is coupled to a memory device for de-encrypting received encrypted information according to a pass word entered by a user, and in which the de-encrypted information is then decoded to derive a message.

A feature of a selective calling radio display pager to be described below, by way of example in illustration of the invention is that it is capable of protecting confidential messages from unauthorized access.

A method for exclusively displaying a confidential message to an authorized user as an optional feature of a selective calling radio display pager will be described below, by way of example in illustration of the invention. In this method, a transmitted paging signal either contains an optional confidential code and a message if the message is confidential or exclusively a message if the message is not confidential. When a paging signal addressed to the pager is received, the message contained therein is stored in a message memory. If the received paging signal contains a confidential code, a prompt is displayed for urging a user to enter a password. If either the entered password is valid or the received paging signal contains no confidential code, the message in the message memory is displayed.

The message in the message memory is scrambled if the received paging signal contains the confidential code, and the scrambled message is descrambled and displayed if the entered password is valid. The scrambled message may be displayed if the entered password is not valid.

There will also be described below, by way of example in illustration of the present invention a selective calling radio display pager for receiving a paging signal having a message field containing data which is either an optional confidential code plus a message if the message is confidential or exclusively a message if the message is not confidential. The pager includes display means, a message memory, password input means, and control means. The control means stores data contained in the message field of a received paging signal into the message memory if the paging signal is addressed to the pager, displays a prompt on the display means for urging a user to enter a password from the password input means if the optional confidential code is contained in the data in the message memory, and displays the message in the memory on the display means if either the entered password is valid or the confidential code is not contained in the received paging signal.

The pager also includes a scrambler/descrambler. The control means causes the scrambler/descrambler to scramble the message in the message memory if the optional confidential code is contained in the data in the message memory, causes the scrambler/descrambler to descramble the scrambled message and displays the descrambled message on the display means if the entered password is valid.

The following description and drawings disclose, by means of an example, the invention which is characterised in the appended claims, whose terms determine the extent of the protection conferred hereby.

In the drawings:-
Fig. 1 is a block diagram of a radio display pager,
Fig. 2 is an illustration of the contents of a paging signal, and
Fig. 3 is a flowchart of the operation of a microprocessor-based controller.

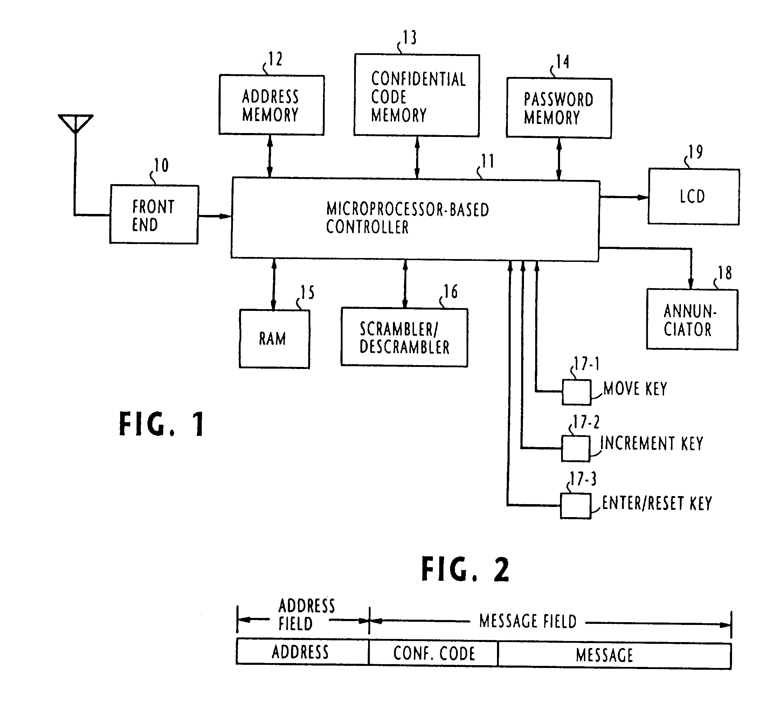

Referring to Fig. 1, a hand-held radio display pager is illustrated as having a radio frequency section, or front end 10 for receiving a broadcast radio paging signal and converting it to a baseband signal. As shown in Fig. 2, the paging signal contains a preamble followed by a sequence of frames each containing a calling address in the address field, and an optional private confidential code and a message in the message field. If the message is of confidential nature, the message sender inserts a confidential code into a specified portion of the message field. The confidential code can be determined by an agreement among the members of a group sharing group-specific messages and sent as part of the message field as indicated in Fig. 2 when sending a confidential message. If the message is not confidential, no confidential code is inserted and the full area of the message field is used for the contents of the message. The received calling address is compared by a microprocessor-based controller 11 with the pager's address stored in an address memory 12. If they match, controller 11 stores the received message into a message memory, or random-access memory 15. An annunciator 18 is then activated to alert the user of the arrival of a message. For power savings purposes, battery saver circuitry, not shown, is provided in the hand-held pager.

Manually operated, "move", "increment" and "enter/reset" keys 17-1, 17-2 and 17-3 are provided. When the "enter/reset" key 17-3 is operated, controller 11 deactivates the annunciator 18 and reads out a message, if there is one, from RAM 15 for display on a liquid crystal display 19. In addition to address memory 12, a confidential code memory 13 and a password memory 14 are provided. Memories 12, 13 and 14 are implemented with respective storage locations of a nonvolatile memory such as EEPROM (electrically erasable programmable read-only memory).

The pager of this invention further includes a scrambler/descrambler 16. As described hereinbelow, the scrambler/descrambler 16 is used for ciphering a received confidential message with a unique pseudorandom pulse sequence to protect the message from unauthorized users and deciphering it when a predetermined password is entered by an authorized user. For entering the password, the "move" key 17-1 is used to move the position of a blinking digit of N-digit numbers on the display 19 to the next and the "increment" key 17-2 is used to increment the value of the blinking digit until the desired number of the digit is reached. The "enter/reset" key 17-3 is depressed when the specified N-digit password is displayed.

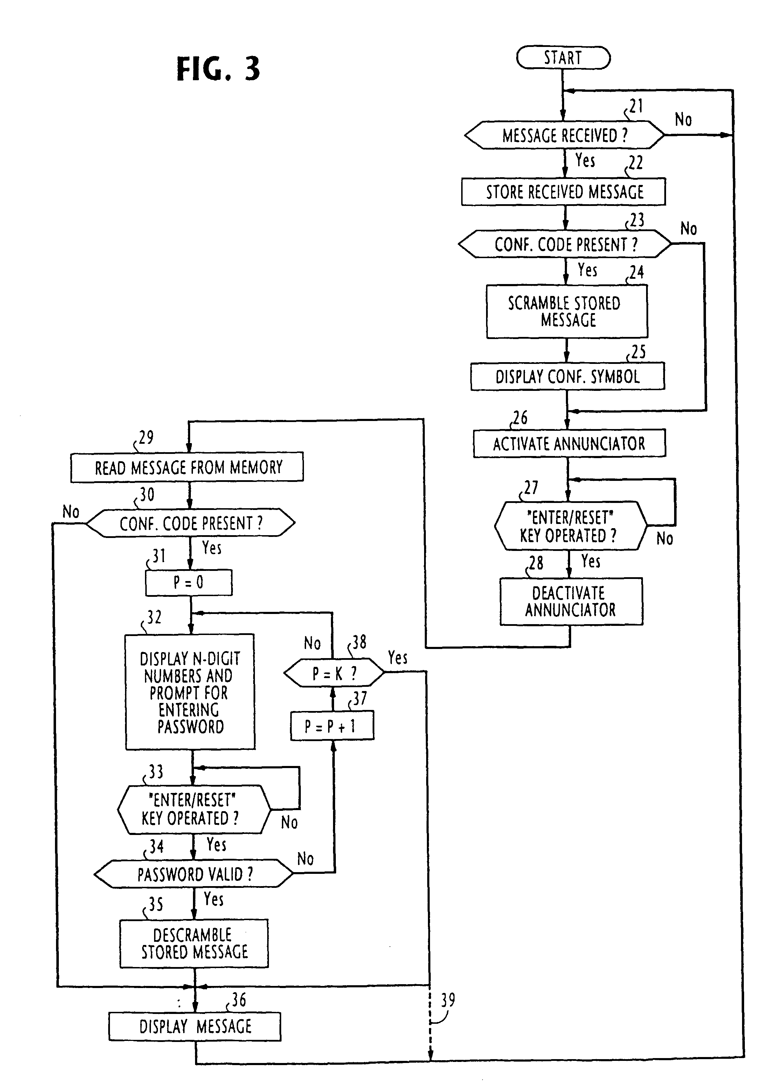

The operation of the controller 11, shown in the flowchart of Fig. 3, begins at step 21 where controller 11 checks to see if a message having the address matching the one in memory 12 is received. If so controller 11 proceeds to step 22 to store data contained in the message field of the paging signal into the message memory 15 and determines, at step 23, whether a prescribed portion of the data in the message field coincides with the confidential code stored in the confidential code memory 13. If they coincide, the message in the memory 15 is confidential and flow proceeds from step 23 to step 24 where the controller supplies the message to the scrambler/descrambler 16. Using a predetermined pseudorandom pulse sequence, the scrambler/descrambler 16 provides encryption of the stored message. At step 25, controller 11 displays a confidential symbol mark on the LCD 19 to indicate that the stored message is of a confidential nature. At step 26, the annunciator 18 is activated to alert the user of the arrival of a message. Flow proceeds to step 27 to determine whether the alerted user operated the key 17. If so, flow proceeds from step 27 to step 28 to deactivate the annunciator 18, and controller 11 reads the stored data from message memory 15 (step 29). If the prescribed portion of data in the message memory 15 does not coincide with the confidential code in the memory 13, it is determined that the message in the message memory 15 is not confidential and the decision at step 23 is negative. In that instance, flow proceeds from step 23 to step 26 to alert the user without scrambling the message.

Flow proceeds to step 30 to check to see if the prescribed portion of the stored data coincides with the confidential code stored in the confidential code memory 13 to determine if the stored message is confidential or not. If this is the case, the stored message is a scrambled version of the received message and flow proceeds to step 31 to set a count value P to zero. At step 32, N-digit numbers (initially all zeros) are displayed with the most significant digit position blinking to attract the user's attention and a prompt is also displayed for urging the user to enter a password. Using the "increment" key 17-2, the user increments the value of the blinking digit. When the desired value is reached for that position, the user moves the blinking position to the next by operating the "move" key 17-1 to repeat the same process. When all the digits of the displayed numbers are adjusted, the user depresses the "enter/reset" key 17-3.

Flow then proceeds to step 33 to check to see if the "enter/reset" key 17-3 is operated. If it is, flow proceeds from step 33 to step 34 to determine whether the entered password matches the one stored in the password memory 14. If they match, the entered password is valid, and the decision is affirmative at step 34. Flow proceeds from step 34 to step 35 where the controller directs the scrambler/ descrambler 16 to descramble the encrypted message using the same pseudorandom sequence as that used in scrambling the message in the memory 15. The descrambled message is then displayed at step 36. Following the execution of step 36, flow returns to step 21.

If the entered password is not correct, the decision at step 34 is negative and flow branches to step 37 to increment the count value P by one and proceeds to step 38 to check to see if P is equal to a preselected number K. If not, controller 1 1 loops back to step 32 to allow the user to enter a password again.

If the user fails to enter the correct password K times, it is concluded that the user is not authorized to access the message and flow proceeds from step 38 to step 36 to display the message in the memory 15. Since step 35 is not executed, the message displayed is a scrambled one.

If no confidential code is contained in the received paging signal, the decision at step 30 is negative, and the stored message was not scrambled at step 23. In this case, flow proceeds from step 30 to step 36 to display the non-scrambled message.

While mention has been made of an embodiment where the scrambler/descrambler 16 is used, this unit as well as steps 23, 24 and 35 can be dispensed with if the controller 11 is modified so that flow proceeds from step 38 to step 21, as indicated by a dotted line 39 in Fig. 3, instead of proceeding to step 36, when the user repeatedly fails to enter the correct password K times.

It will be understood that, although a particular arrangement has been described, by way of example in illustration of the invention, variations and modifications thereof, as well as other arrangements may be conceived within the scope of the protection sought by the appended claims.

## Claims

1. A method for displaying exclusively a confidential message to an authorized user as an optional feature of a selective calling radio display pager, including the steps of
a) transmitting a paging signal which contains an optional confidential code and a message, if the message is confidential, and which contains exclusively a message if the message is not confidential,
b) receiving the paging signal if the paging signal is addressed to the pager and storing the message contained in the received paging signal in a message memory (15),
c) determining whether or not the received paging signal contains the optional confidential code,
d) if the received paging signal contains the optional confidential code, scrambling the message in the message memory (15) and displaying a prompt for urging a user to enter a password, and, if the entered password is valid, descrambling the scrambled message and displaying the descrambled message, and
e) if the received paging signal does not contain the optional confidential code, displaying the message which is in the message memory (15).

2. A method as claimed in claim 1, wherein the step (d) includes the step of displaying the scrambled message if the entered password is not valid.

3. A selective calling radio display pager for receiving a paging signal having a message field containing data which is an optional confidential code plus a message, if the message is confidential and which is exclusively a message if the message is not confidential, including
display means (19),
a message memory (15),
password input means (17),
control means (11, 12, 13, 14) for storing the data contained in the message field of the received paging signal in the message memory (15) if the paging signal is addressed to the pager, for displaying a prompt on the display means (19) for urging a user to enter a password via the password input means (17) if the optional confidential code is contained in the data in the message memory (15), and displaying the message which is in the message memory (15) on the display means (19) if either the entered password is valid, or the optional confidential code is not contained in the received paging signal, and
a scrambler/descrambler (16),
wherein the control means causes the scrambler/descrambler (16) to scramble the message in the message memory (15) if the optional confidential code is contained in the data in the message memory (15), and causes the scrambler/descrambler (16) to descramble the scrambled message and display the descrambled message on the display means (19) if the entered password is valid.

4. A selective calling radio display pager as claimed in claim 3, wherein the control means includes
an address memory (12) for storing a pager's address,
a confidential code memory (13) for storing a confidential code,
a password memory (14) for storing a password, and
a microprocessor-based controller (11) for storing the data contained in the message field of the received paging signal in the message memory (15) if there is a match between an address contained in the paging signal and the pagers address in the address memory (12), causing the scrambler/descrambler (16) to scramble the message in the message memory (15), displaying the prompt on the display means (19) if there is a match between a prescribed portion of the data in the message memory (15) and the confidential code in the confidential code memory (13), causing the scrambler/descrambler (16) to descramble the scrambled message and displaying the descrambled message on the display means (19) if there is a match between the entered password and the password in the password memory (14), and displaying the message which is in the message memory (15) on the display means (19) if there is a mismatch between the prescribed portion of the data in the message memory (15) and the confidential code in the confidential code memory (13).

5. A selective calling radio display pager as claimed in claim 4, wherein the microprocessor-based controller (11) includes means for displaying the scrambled message on the display means (19) if a mismatch repeatedly occurs between the entered password and the password in the password memory (14).

6. A selective calling radio display pager as claimed in claim 3 wherein the control means (11,12, 13, 14) is arranged to display multiple-digit numbers on the display means (19), each of the multi-digit numbers being variable in response to manual commands entered via the password input means (17).

## Patentansprüche

1. Verfahren zum Anzeigen einer vertraulichen Nachricht ausschliesslich an einen berechtigten Benutzer als optionales Merkmal eines Anwahl-Funkruf-Pagers, mit den Schritten:
a) Senden eines Rufsignals, das einen optionalen Vertraulichkeitscode und eine Nachricht enthält, wenn die Nachricht vertraulich ist, und das nur eine Nachricht beinhaltet, wenn es sich um eine nicht vertrauliche Nachricht handelt;
b) Empfangen des Rufsignals, wenn dieses an den Pager adressiert ist, und Abspeichern der in dem empfangenen Rufsignal enthaltenen Nachricht in einen Nachrichtenspeicher (15);
c) Bestimmen, ob das empfangene Rufsignal den optionalen Vertraulichkeitscode enthält oder nicht;
d) Verwürfeln der im Nachrichtenspeicher (15) befindlichen Nachricht und Anzeigen einer Aufforderung an den Benutzer zur Eingabe eines Passworts, wenn das empfangene Rufsignal den optionalen Vertraulichkeitscode enthält, und Entwürfeln der verwürfelten Nachricht sowie Anzeigen der entwürfelten Nachricht, wenn das eingegebene Passwort gültig ist; und
e) Anzeigen der im Nachrichtenspeicher (15) befindlichen Nachricht, wenn das empfangene Rufsignal den optionalen Vertraulichkeitscode nicht enthält.

2. Verfahren nach Anspruch 1, wobei der Schritt (d) als weiteren Schritt die Anzeige der verwürfelten Nachricht aufweist, wenn das eingegebene Passwort nicht gültig ist.

3. Anwahl-Funkruf-Nachrichtenpager zum Empfangen eines Rufsignals mit einem Nachrichtenfeld, das Daten in Form eines optionalen Vertraulichkeitscodes sowie eine Nachricht enthält, wenn die Nachricht vertraulich ist, und die nur eine Nachricht beinhalten, wenn es sich um eine nicht vertrauliche Nachricht handelt, mit:
einer Anzeigeeinrichtung (19),
einem Nachrichtenspeicher (15),
einer Passwort-Eingabeeinrichtung (17),
einer Steuereinrichtung (11, 12, 13, 14) zum Speichern der im Nachrichtenfeld des empfangenen Rufsignals enthaltenen Daten im Nachrichtenspeicher (15), wenn das Rufsignal an den Pager adressiert ist, zum Anzeigen einer Aufforderung auf der Anzeigeeinrichtung (19) an den Benutzer, über die Eingabeinrichtung (17) ein Passwort einzugeben, wenn die Daten im Nachrichtenspeicher (15) einen optionalen Vertraulichkeitscode enthalten, und Anzeigen der im Nachrichtenspeicher (15) befindlichen Nachricht auf der Anzeigeeinrichtung (19), wenn entweder das eingegebene Passwort gültig oder der optionale Vertraulichkeitscode nicht in dem empfangenen Rufsignal enthalten ist, und
einem Verwürfler/Entwürfler (16),
wobei die Steuereinrichtung den Verwürfler/Entwürfler (16) veranlasst, die Nachricht im Nachrichtenspeicher (15) zu verwürfeln, wenn der optionale Vertraulichkeitscode in den Daten im Nachrichtenspeicher (15) enthalten ist, und die verwürfelte Nachricht zu entwürfeln sowie die entwürfelte Nachricht auf der Anzeigeeinrichtung (19) anzuzeigen, wenn das eingegebene Passwort gültig ist.

4. Anwahl-Funkruf-Nachrichtenpager nach Anspruch 3, wobei die Steuereinrichtung aufweist;
einen Adressenspeicher (12) zum Speichern der Adresse eines Pagers,
einen Vertraulichkeitscode-Speicher (13) zum Speichern eines Vertraulichkeitscodes,
einen Passwortspeicher (14) zum Speichern eines Passworts, und
eine Steuereinrichtung (11) auf Mikroprozessorbasis zum Speichern der im Nachrichtenfeld des empfangenen Rufsignals enthaltenen Daten im Nachrichtenspeicher (15), wenn Übereinstimmung zwischen einer im Rufsignal enthaltenen Adresse und der Pager-Adresse im Adressenspeicher (12) vorliegt, Veranlassen des Verwürflers/Entwürflers (16), die im Nachrichtenspeicher (15) befindliche Nachricht zu verwürfeln, Anzeigen der Aufforderung auf der Anzeigeeinrichtung (19), wenn Übereinstimmung zwischen einem vorgeschriebenen Teil der Daten im Nachrichtenspeicher (15) und dem Vertraulichkeitscode im Vertraulichkeitscode-Speicher (13) besteht, Veranlassen des Verwürflers/Entwürflers (16), die verwürfelte Nachricht zu entwürfeln und Anzeigen der entwürfelten Nachricht auf der Anzeigeeinrichtung (19) bei Übereinstimmung zwischen dem eingegebenen Passwort und dem Passwort im Passwortspeicher (14), und Anzeigen der im Nachrichtenspeicher (15) befindlichen Nachricht auf der Anzeigeeinrichtung (19), wenn eine Nichtübereinstimmung zwischen dem vorbeschriebenen Teil der Daten im Nachrichtenspeicher (15) und dem Vertraulichkeitscode im Vertraulichkeitscode-Speicher (13) gegeben ist.

5. Anwahl-Funkruf-Nachrichtenpager nach Anspruch 4, wobei die Steuereinrichtung (11) auf Mikroprozessorbasis eine Einrichtung zum Anzeigen der verwürfelten Nachricht auf der Anzeigeeinrichtung (19) aufweist, wenn wiederholt eine Nichtübereinstimmung zwischen dem eingegebenen Passwort und dem Passwort im Passwortspeicher (14) vorliegt.

6. Anwahl-Funkruf-Nachrichtenpager nach Anspruch 3, wobei die Steuereinrichtung (11, 12, 13, 14) so konzipiert ist, dass sie mehrzifferige Zahlen auf der Anzeigeeinrichtung (19) anzeigt, von denen jede als Antwort auf über die Passwort-Eingabeeinrichtung (17) eingegebene manuelle Befehle variabel ist.

## Revendications

1. Procédé pour afficher exclusivement un message confidentiel destiné à un utilisateur autorisé en tant que caractéristique optionnelle d'un récepteur d'appel radio à appel sélectif avec affichage, incluant les étapes consistant :
a) à émettre un signal d'appel qui contient un code confidentiel optionnel et un message, si le message est confidentiel, et qui contient exclusivement un message si le message n'est pas confidentiel,
b) à recevoir le signal d'appel si le signal d'appel est adressé au récepteur d'appel et à mémoriser, dans une mémoire de message (15), le message contenu dans le signal d'appel reçu,
c) à déterminer si le signal d'appel reçu contient ou non le code confidentiel optionnel,
d) si le signal d'appel reçu contient le code confidentiel optionnel, à embrouiller le message dans la mémoire de message (15) et à afficher un message d'invite destiné à amener un utilisateur à entrer un mot de passe, et, si le mot de passe est valide, à désembrouiller le message embrouillé et à afficher le message désembrouillé, et
e) si le signal d'appel reçu ne contient pas le code confidentiel optionnel, à afficher le message qui se trouve dans la mémoire de message (15).

2. Procédé selon la revendication 1, dans lequel l'étape (d) inclut l'étape consistant à afficher le message embrouillé si le mot de passe entré n'est pas valide.

3. Récepteur d'appel radio à appel sélectif avec affichage destiné à recevoir un signal d'appel comportant un champ de message qui contient des données constituant un code confidentiel optionnel plus un message, si le message est confidentiel, et constituant exclusivement un message si le message n'est pas confidentiel, incluant
des moyens d'affichage (19),
une mémoire de message (15),
des moyens d'entrée de mot de passe (17),
des moyens de commande (11, 12, 13, 14) destinés à mémoriser les données contenues dans le champ de message du signal d'appel reçu dans la mémoire de message (15) si le signal d'appel est adressé au récepteur d'appel, à afficher un message d'invite sur les moyens d'affichage (19) destiné à amener un utilisateur à entrer un mot de passe via les moyens d'entrée de mot de passe (17) si le code confidentiel optionnel est contenu dans les données dans la mémoire de message (15), et à afficher le message, qui se trouve dans la mémoire de message (15), sur les moyens d'affichage (19) dans le cas où, soit le mot de passe entré est valide, soit le code confidentiel optionnel n'est pas contenu dans le signal d'appel reçu, et
un embrouilleur/désembrouilleur (16),
dans lequel les moyens de commande amènent l'embrouilleur/désembrouilleur (16) à embrouiller le message dans la mémoire de message (15) si le code confidentiel optionnel est contenu dans les données dans la mémoire de message (15), et amènent l'embrouilleur/désembrouilleur (16) à désembrouiller le message embrouillé et à afficher le message désembrouillé sur les moyens d'affichage (19) si le mot de passe entré est valide.

4. Récepteur d'appel radio à appel sélectif avec affichage selon la revendication 3, dans lequel les moyens de commande incluent
une mémoire d'adresse (12) pour mémoriser l'adresse d'un récepteur d'appel,
une mémoire de code confidentiel (13) pour mémoriser un code confidentiel,
une mémoire de mot de passe (14) pour mémoriser un mot de passe, et
un contrôleur à microprocesseur (11) pour mémoriser les données contenues dans le champ de message du signal d'appel reçu dans la mémoire de message (15) s'il existe une correspondance entre une adresse contenue dans le signal d'appel et l'adresse du récepteur d'appel dans la mémoire d'adresse (12), pour amener l'embrouilleur/désembrouilleur (16) à embrouiller le message dans la mémoire de message (15), pour afficher le message d'invite sur les moyens d'affichage (19) s'il existe une correspondance entre une partie prescrite des données dans la mémoire de message (15) et le code confidentiel dans la mémoire de code confidentiel (13), pour amener l'embrouilleur/désembrouilleur (16) à désembrouiller le message embrouillé et pour afficher le message désembrouillé sur les moyens d'affichage (19) s'il existe une correspondance entre le mot de passe entré et le mot de passe dans la mémoire de mot de passe (14), et pour afficher le message qui se trouve dans la mémoire de message (15) sur les moyens d'affichage (19) s'il existe une non correspondance entre la partie prescrite des données dans la mémoire de message (15) et le code confidentiel dans la mémoire de code confidentiel (13).

5. Récepteur d'appel radio à appel sélectif avec affichage selon la revendication 4, dans lequel le contrôleur à microprocesseur (11) inclut des moyens pour afficher le message embrouillé sur les moyens d'affichage (19) si une non correspondance se produit de façon répétitive entre le mot de passe entré et le mot de passe dans la mémoire de mot de passe (14).

6. Récepteur d'appel radio à appel sélectif avec affichage selon la revendication 3, dans lequel les moyens de commande (11, 12, 13, 14) sont configurés pour afficher des nombres à chiffres multiples sur les moyens d'affichage (19), chacun des nombres à chiffres multiples pouvant varier en réponse à des commandes manuelles entrées via les moyens d'entrée de mot de passe (17).
